Europäisches Patentamt

European Patent Office

Office européen des brevets

(11) Numéro de publication: **0 425 393 A1**

# (12) DEMANDE DE BREVET EUROPEEN

(21) Numéro de dépôt: 90420455.9

(51) Int. Cl.⁵: **H02B 1/21**

(22) Date de dépôt: **22.10.90**

(30) Priorité: **23.10.89 FR 8914608**

(43) Date de publication de la demande:
**02.05.91 Bulletin 91/18**

(84) Etats contractants désignés:
**AT BE CH DE DK ES GB GR IT LI LU NL SE**

(71) Demandeur: **SERVELEC INDUSTRIE S.A.**
**Z.I. de Fétan**
**F-01600 Trevoux(FR)**

(72) Inventeur: **Forestier, Paul Emile**
**5 Allée des Cèdres**
**F-69300 Caluire(FR)**

(74) Mandataire: **Bratel, Gérard**
**Cabinet GERMAIN & MAUREAU B.P. 3011**
**F-69392 Lyon Cédex 03(FR)**

(54) **Dispositif pour la réalisation d'ensembles pour la commande et la protection de circuits électriques basse tension.**

(57) Le dispositif comprend une gaine horizontale modulable d'alimentation (9), une structure porteuse (10) également modulable et une multiplicité d'unités fonctionnelles amovibles(11) renfermant l'appareillage électrique. La gaine d'alimentation (9), fixée à la structure porteuse (10), comporte des conducteurs électriques horizontaux (12) rendus accessibles par l'avant au moyen d'ouvertures (18) ménagées selon un pas de base (P) déterminé. Chaque unité fonctionnelle (11), de largeur égale au pas de base ou à un multiple de ce pas, comporte des fiches de prise de courant qui s'embrochent dans la gaine (9), au travers des ouvertures (18), lorsque l'unité est insérée dans la structure porteuse (10).

FIG.3

# DISPOSITIF POUR LA RÉALISATION D'ENSEMBLES POUR LA COMMANDE ET LA PROTECTION DE CIRCUITS ÉLECTRIQUES BASSE TENSION

La présente invention concerne un dispositif pour la réalisation d'ensembles pour la commande et la protection de circuits électriques basse tension, appartenant à des installations industrielles.

Depuis plusieurs décennies, la commande et la protection des circuits électriques dans les installations industrielles sont couramment réalisées à partir d'ensembles dont les unités fonctionnelles sont débrochables. Les figures en perspective 1 et 2 du dessin schématique annexé illustrent deux exemples typiques de systèmes actuellement utilisés.

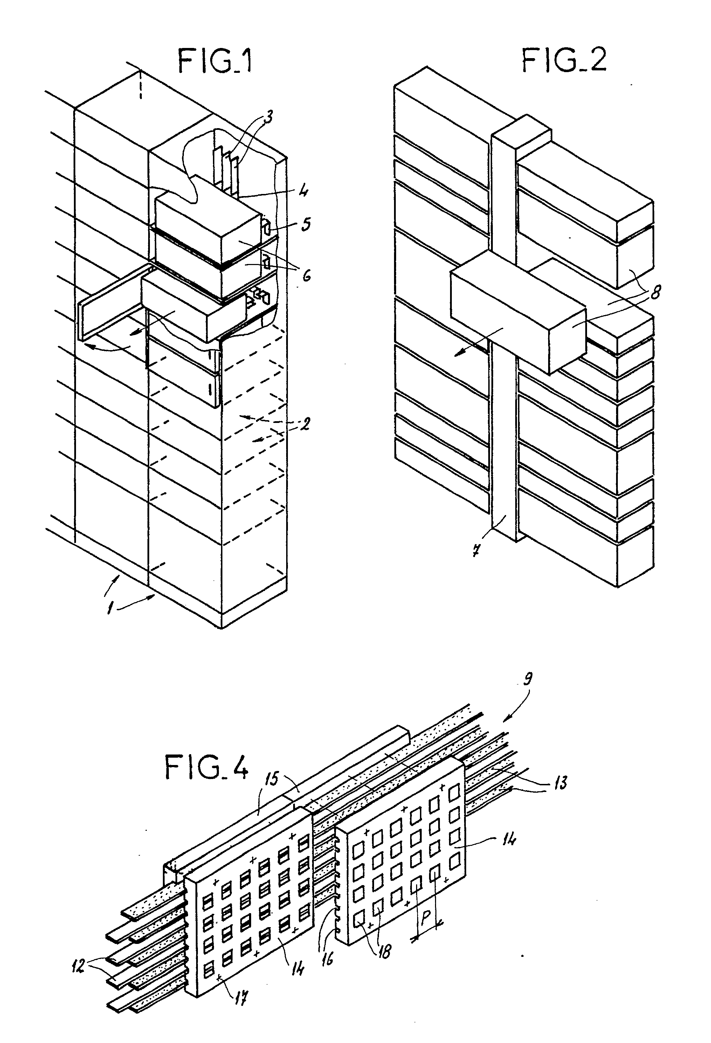

Un premier système connu, montré sur la figure 1, comporte une structure métallique fermée, formée d'un assemblage de colonnes 1 adjacentes, divisées en compartiments horizontaux 2. Cette structure fixe contient les circuits principaux d'alimentation électrique 3, réalisés sous la forme de barres verticales s'étendant le long des colonnes 1, et elle comporte dans chacun des compartiments 2 des passages (obturés ou non) pour les prises "amont" 4 et "aval" 5 de l'unité fonctionnelle concernée.

En correspondance avec chacun des compartiments 2 précités, sont prévues des unités fonctionnelles amovibles 6, constituées chacune par un appareillage spécifique tel que fusibles, disjoncteurs, contacteurs, relais, prises, etc. monté sur un support métallique réalisé sous la forme d'une platine, d'un panier ou d'un tiroir.

A la suite de l'évolution importante de l'appareillage électrique, avec une réduction de volume des appareils allant parfois jusqu'à 50 pour des caractéristiques identiques, ces ensembles présentent, pour maintenir un rapport cohérent entre le coût des structures et celui de l'appareillage mis en oeuvre, des unités fonctionnelles trop compactées Il en résulte notamment :
- des dispositions irrationnelles de l'appareillage,
- un accès difficile aux compartiments supérieurs et inférieurs,
- des difficultés de raccordement du câblage.

Pour pallier une partie de ces inconvénients, de nouveaux systèmes de conception allégée sont apparus, réalisés généralement selon la figure 2.

Ces systèmes récents comprennent des gaines métalliques verticales 7 qui renferment chacune un jeu de barres d'alimentation et qui permettent, de part et d'autre, l'arrimage des unités fonctionnelles amovibles 8. Selon les réalisations, le branchement de ces unités fonctionnelles 8 s'effectue soit directement, soit par l'intermédiaire d'un sectionneur solidaire de chaque unité amovible. Les gaines 7 sont raccordées à un jeu de barres omnibus horizontal, et elles forment la partie fixe de l'ensemble.

Les unités fonctionnelles amovibles 8 sont constituées, chacune, par un support métallique équipé de l'appareillage approprié et éventuellement protégé par un capot.

De tels ensembles sont normalement installés sur un châssis ou à l'intérieur d'armoires non compartimentées. La conception de ces ensembles améliore l'accès à l'appareillage et facilite le raccordement du câblage, mais elle augmente fortement l'irrationnalité des dispositions de l'appareillage qui se trouve presque toujours installé horizontalement.

Enfin, il faut noter que, dans les deux systèmes décrits ci-dessus, la forme monolithique des parties fixes, telles que colonnes prévues pour environ 16 unités fonctionnelles ou gaines prévues pour environ 32 unités fonctionnelles, peut entraîner un surcoût important si le nombre d'unités fonctionnelles dépasse légèrement un multiple de la capacité des parties fixes.

La présente invention vise à éliminer les inconvénients des systèmes actuels, en fournissant un système de conception différente qui soit simultanément :
- logique du point de vue de la mise en oeuvre de l'appareillage,
- simple dans la réalisation et la modularité de ses éléments,
- d'une architecture claire, et
- ergonomique, notamment pour l'accessibilité à tous les organes.

A cet effet, l'invention a pour objet un dispositif pour la réalisation d'ensembles pour la commande et la protection de circuits électriques basse tension, qui se compose essentiellement, en combinaison :
- d'une gaine horizontale modulable d'alimentation, avec des conducteurs électriques horizontaux superposes rendus accessibles par l'avant au travers d'ouvertures ménagées selon un pas de base déterminé,
- d'une structure porteuse également modulable, à laquelle est fixée la gaine horizontale d'alimentation, et
- d'une multiplicité d'unités fonctionnelles amovibles, renfermant l'appareillage électrique proprement dit et possédant des largeurs égales au pas de base ou à des multiples du pas de base, chaque unité fonctionnelle étant prévue pour être insérée dans (la structure porteuse et comportant des fiches de prise de courant prevues pour venir s'embrocher dans la gaine d'alimentation, en traversant des ouvertures de cette dernière, lorsque l'unité fonctionnelle est insérée dans la structure porteuse.

De préférence, la gaine horizontale d'alimentation comprend des conducteurs électriques horizontaux superposés, prévus pour un contact externe ou interne des fiches de prise de courant appartenant aux unités fonctionnelles amovibles, entre lesquels sont disposés des séparateurs horizontaux isolants.

Selon un mode de réalisation, la gaine horizontale d'alimentation comprend encore des paires de demi-coquilles isolantes, appliquées devant et derrière les conducteurs et les séparateurs et assemblées entre elles, au moins les demi-coquilles tournées vers l'avant présentant des rangées verticales d'ouvertures ménagées au droit de chaque conducteur pour le passage des fiches de prise de courant appartenant aux unités fonctionnelles amovibles, l'intervalle entre deux rangées consécutives d'ouvertures définissant le pas de base. Les demi-coquilles isolantes sont avantageusement pourvues de rainures horizontales pour le maintien des conducteurs et des séparateurs.

Selon un autre aspect de l'invention, la structure porteuse modulable est composée d'éléments porteurs, comprenant d'une part un profilé de positionnement et de fixation contre lequel est fixée la gaine horizontale d'alimentation et qui reçoit les unités fonctionnelles en position insérée, et d'autre part des cadres d'assemblage qui solidarisent le profilé avec une plaque-support inférieure prévue pour recevoir le câblage.

Selon un mode de réalisation particulier de la structure porteuse, le profilé de positionnement et de fixation possède une section en "C", la gaine horizontale d'alimentation étant fixée contre le fond de ce profilé, tandis que les cadres d'assemblage sont en forme de "L", leur partie inférieure tournée vers l'avant soutenant la plaque-support inférieure.

La structure porteuse peut comporter en outre un ou des guides d'appui et de mise à la terre, coopérant avec une ou des tiges correspondantes prévues à l'arrière d'une unité fonctionnelle amovible. Cette structure porteuse peut encore comprendre un bornier pour circuits de puissance, et aussi un bornier pour circuits auxiliaires. Selon une configuration particulière, les guides d'appui et de mise à la terre, ainsi que le bornier pour circuits de puissance, sont logés dans le profilé de section en "C", au-dessous de la gaine, tandis que le bornier pour circuits auxiliaires est monté sur le bord antérieur de la plaque-support inférieure.

Chaque unité fonctionnelle amovible comprend avantageusement un boîtier de base, contenant une platine de préférence réglable en position qui supporte l'appareillage, tandis que la partie arrière du boîtier supporte les fiches de prise de courant prévues pour coopérer avec la gaine horizontale d'alimentation ou avec le bornier pour circuits de puissance. L'unité fonctionnelle amovible peut encore comporter à l'arrière un cache de protection des fiches de prise de courant, venant s'encastrer dans la structure porteuse lorsque l'unité fonctionnelle est insérée. Cette unité fonctionnelle peut être munie par ailleurs d'un cordon souple multiconducteurs, pourvu d'une fiche terminale prévue pour coopérer avec le bornier pour circuits auxiliaires.

Selon une caractéristique complémentaire, des poignées sont prévues sur le boîtier de base de chaque unité fonctionnelle amovible, pour faciliter l'insertion ou le retrait de cette dernière. Enfin, le boîtier de base de chaque unité fonctionnelle amovible est avantageusement fermé, à l'avant, par un couvercle transparent ouvrant et/ou amovible, de préférence un couvercle dégondable.

Le dispositif, défini ci-dessus dans ses caractéristiques générales et particulières, s'applique à la réalisation d'un ensemble industriel pour la commande et la protection de circuits électriques basse tension, composé de tels dispositifs superposés constitués chacun d'une gaine horizontale d'alimentation, d'une structure porteuse et d'une multiplicité d'unités fonctionnelles amovibles, l'ensemble étant monté sur un support général fermé ou non, tel que mur, châssis, armoire, etc.

De toute façon, l'invention sera mieux comprise, et ses avantages seront mis en évidence, à l'aide de la description qui suit, en référence au dessin schématique annexé représentant, à titre d'exemple non limitatif, une forme d'exécution de ce dispositif pour la réalisation d'ensembles pour la commande et la protection de circuits électriques basse tension :

Figure 3 est une vue en perspective montrant les constituants principaux d'un dispositif conforme à la présente invention ;

Figure 4 est une vue en perspective de la gaine horizontale d'alimentation du dispositif de la figure 3 ;

Figure 5 est une vue en bout de ce dispositif, avec indication d'une unité fonctionnelle en position retirée ;

Figure 6 est une vue similaire à la figure 5, mais avec indication de l'unité fonctionnelle en position insérée ;

Figure 7 est une vue partielle, en perspective, d'un ensemble réalisé à partir du dispositif selon les figures précédentes.

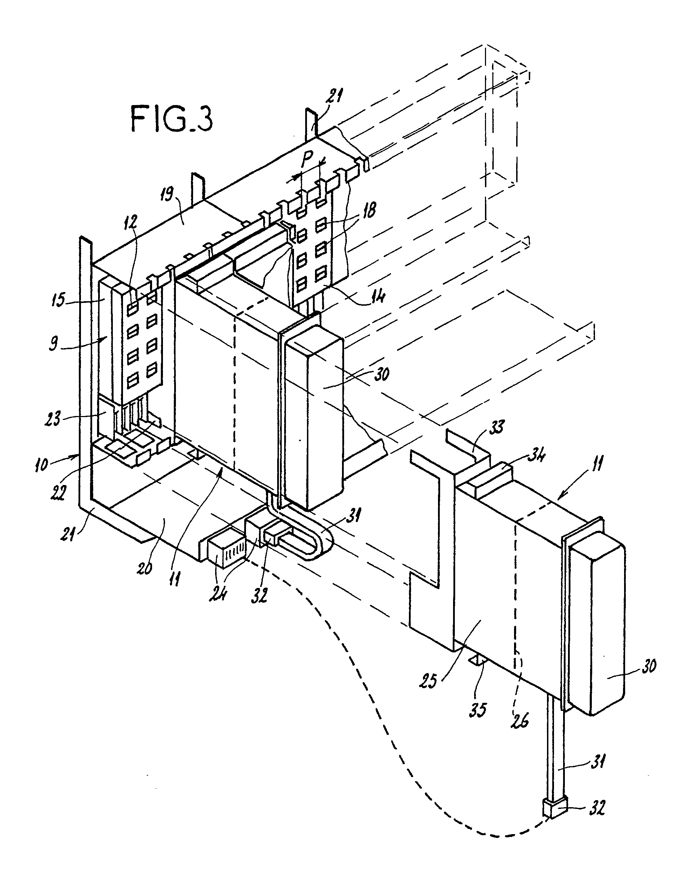

Considéré d'une façon générale, le dispositif représenté aux figures 3 à 6 se compose d'une gaine horizontale modulable d'alimentation 9, d'une structure porteuse 10 également modulable, et d'une multiplicité d'unités fonctionnelles amovibles 11.

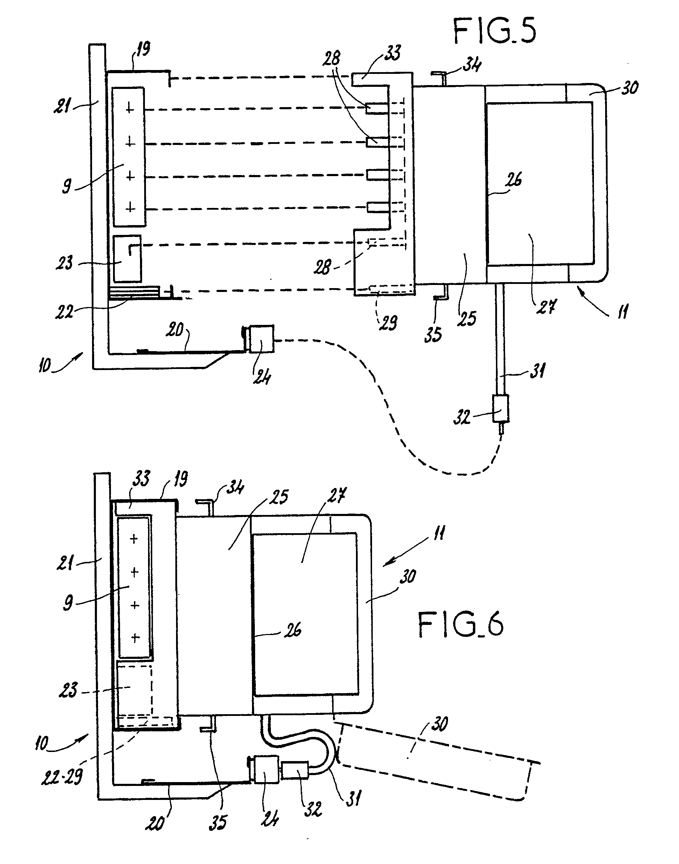

La gaine horizontale d'alimentation 9, montrée plus particulièrement à la figure 4, comprend plusieurs conducteurs électriques horizontaux super-

posés 12, par exemple trois ou quatre conducteurs, prévus pour un contact externe ou interne. Entre les conducteurs 12 sont disposés des séparateurs horizontaux isolants 13, qui évitent toute propagation d'un arc électrique en cas de défaut.

Des paires de demi-coquilles associées 14 et 15, isolantes et pourvues de rainures horizontales 16, assurent le maintien et la fixation des conducteurs 12 et des séparateurs 13. A cet effet, les deux demi-coquilles 14 et 15 d'une même paire sont appliquées l'une devant, et l'autre derrière les conducteurs 12 et les séparateurs 13, et sont assemblées l'une à l'autre en divers points comme indiqué en 17. Au moins les demi-coquilles 14 tournées vers l'avant présentent plusieurs rangées verticales d'ouvertures 18, avec dans chaque rangée une ouverture 18 au droit de chaque conducteur 12. L'intervalle qui sépare deux rangées verticales consécutives d'ouvertures 18 définit le pas de base P du système. Ces ouvertures 18 permettent le passage des fiches de prise de courant des unités fonctionnelles 11, décrites ci-après, et elles assurent aussi la circulation de l'air nécessaire au refroidissement des condcuteurs 12.

La structure porteuse 10, visible aux figures 3, 5 et 6, est composée d'éléments porteurs conçus en concordance avec le pas P du système. Un élément porteur comprend un profilé de section en "C" 19 de positionnement et de fixation, une plaque-support inférieure 20, et deux cadres d'assemblage verticaux 21, en forme de "L" avec partie inférieure tournée vers l'avant, qui solidarisent le profilé 19 avec la plaque-support 20.

La gaine horizontale d'alimentation 9 est fixée contre le fond du profilé 19, tandis que la plaque inférieure 20 soutenue par les cadres 21 sert de support au câblage (non représenté). La structure 10 supporte encore, au droit de chaque départ concerné, un ou deux guides d'appui et de mise à la terre 22, un bornier 23 avec plages de contact pour circuits de puissance, et un bornier 24 avec alvéoles pour les circuits auxiliaires. Dans l'exemple montré au dessin, les guides 22 et le premier bornier 23 sont logés dans le profilé de section en "C" 19, au-dessous de la gaine 9, tandis que l'autre bornier 24 est monté sur le bord antérieur de la plaque-support inférieure 20.

Les unités fonctionnelles amovibles 11 présentent un profil constant, apparaissant clairement sur les figures 3 et 5 où une unité est montrée en position retirée. Ces unités 11 ne diffèrent les unes des autres extérieurement que par leurs largeurs qui sont déterminées en fonction de l'appareillage spécifique interne, les largeurs desdites unités étant égales au pas de base P ou à des multiples du pas de base P.

Chaque unité fonctionnelle 11 comprend un boîtier de base 25, dont un flasque latéral est démontable. Le boîtier 25 contient, vers l'avant, une platine 26 réglable en position, qui supporte l'appareillage prenant place en 27, cet appareillage incluant par exemple un organe de coupure en charge verrouillable de l'extérieur du boîtier 25. L'arrière du boîtier 25 supporte des fiches de prise de courant 28, ainsi qu'une ou des tiges d'appui et de mise à la terre 29. Un couvercle transparent dégondable 30 ferme le boîtier 25 à l'avant.

Lorsque l'unité fonctionnelle 11 est insérée dans le caisson 19 (position montrée sur la figure 4), les fiches de prise de courant 28 viennent s'embrocher :
- pour l'alimentation "amont", dans la gaine 9 en traversant les ouvertures correspondantes 18, soit avec un contact externe (chaque fiche venant pincer un conducteur fixe horizontal 12), soit avec un contact interne (chaque fiche venant s'insérer entre deux faces d'un même conducteur fixe horizontal) ;
- pour le départ "aval", dans le bornier 23 pour circuits de puissance.

La ou les tiges d'appui et de mise à la terre 29 coopèrent alors avec les guides correspondants 22 appartenant à la structure porteuse 10, tandis qu'un cordon souple multiconducteurs 31, pourvu d'une fiche terminale 32, permet le raccordement de l'unité fonctionnelle 11 au bornier 24, pour le raccordement des circuits auxiliaires.

L'unité fonctionnelle amovible 11 comporte encore à l'arrière un cache 33 pour la protection des fiches de prise de courant 28, le cache 33 venant s'encastrer dans des encoches prévues à cet effet sur le profilé 19 de la structure porteuse 10. Enfin, des poignées supérieure 34 et inférieure 35 sont prévues sur le boîtier 25, pour faciliter l'insertion ou le retrait de l'unité fonctionnelle 11.

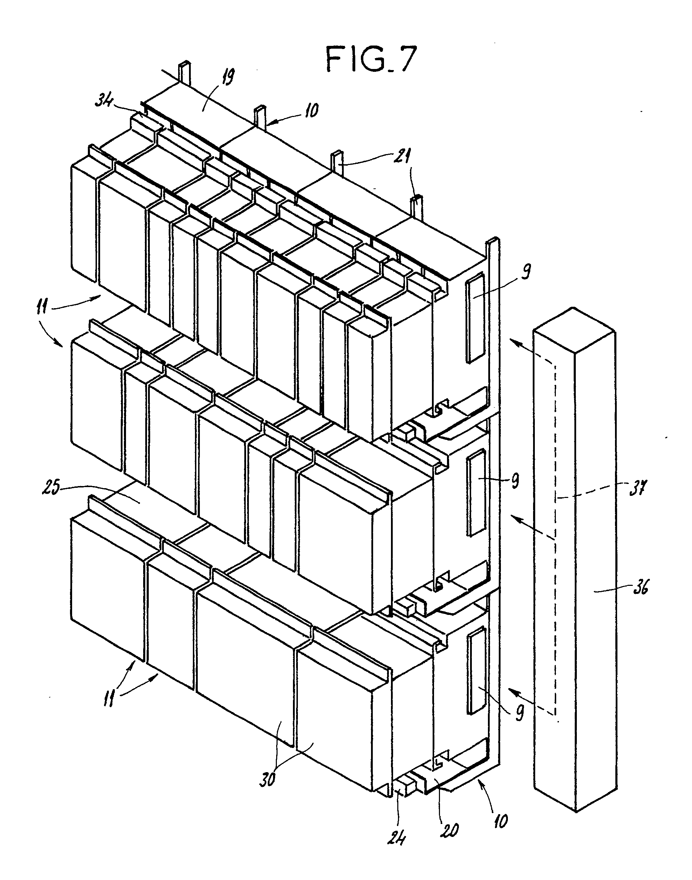

La figure 7 montre un exemple d'un ensemble industriel réalisé à partir du dispositif décrit ci-dessus. Cet ensemble comporte trois dispositifs superposés, constitués chacun d'une gaine horizontale d'alimentation 9, d'une structure porteuse 10 et d'une multiplicité d'unités fonctionnelles amovibles 11 ; ainsi, l'ensemble comporte dans l'exemple considéré trois rangées horizontales superposées d'unités fonctionnelles 11, qui peuvent renfermer divers appareillages de commande et/ou de protection, tels que : fusibles, disjoncteurs, contacteurs, relais, etc. Tout cet ensemble peut être fixé directement contre un mur, ou sur un châssis, ou encore dans une armoire protégée ou étanche, non compartimentée, pour constituer plus particulièrement ce qu'il est convenu d'appeler un "tableau" de distribution électrique. Un élément latéral de fermeture vertical 36 peut être appliqué à une extrémité de l'ensemble, cet élément 36 renfermant les conducteurs 37 dirigés vers les différentes gaines d'alimentation 9. Une quelconque unité fonctionnelle 11 d'un tel ensemble peut être insérée ou retirée, sans mise hors tension de l'ensemble en service.

Des dispositifs et un ensemble, tels que décrits ci-dessus, procurent une disposition logique et cohérente des divers appareillages de commande et de protection, disposés verticalement dans les boîtiers 25. Les borniers de raccordement pour circuits de puissance 23 et pour circuits auxiliaires 24 sont totalement accessibles de l'avant, et situés au droit de l'unité fonctionnelle 11 concernée. Le passage du câblage peut être réalisé indifféremment par l'avant ou par l'arrière de l'ensemble.

De plus, l'architecture de l'ensemble assure une disposition harmonieuse et évidente de l'appareillage. Tous les organes de cet appareillage sont protégés par le couvercle transparent 30, les rendant bien visibles ; en particulier, les verrouillages de sécurité assurés mécaniquement, par exemple au moyen de cadenas, sont visibles en permanence.

Par ailleurs, la conception modulaire, particulière des éléments constitutifs du dispositif permet une grande variété dans la construction d'ensembles s'adaptant facilement aux problèmes ou contraintes spécifiques des utilisateurs.

Enfin, la conception générale du système proposé permet une installation avec ou sans enveloppe extérieure, dans un volume d'accès facile à un opérateur, pour les interventions liées au raccordement, à l'exploitation ou à la maintenance.

Comme il va de soi, l'invention ne se limite pas à la seule forme d'exécution de ce dispositif pour la réalisation d'ensembles pour la commande et la protection des circuits électriques basse tension qui a été décrite ci-dessus, à titre d'exemple elle en embrasse, au contraire, toutes les variantes de réalisation et d'application respectant le même principe. Ainsi, l'on ne s'éloignerait pas du cadre de l'invention par des modifications portant sur :
- le nombre et la forme des conducteurs de la gaine horizontale d'alimentation,
- la forme du profilé et des cadres d'assemblage de la structure porteuse,
- la configuration extérieure des unités fonctionnelles amovibles,
- la nature de l'appareillage contenu dans ces unités fonctionnelles, ou
- l'agencement relatif et les dimensions de dispositifs regroupés pour former un ensemble industriel.

## Revendications

1. Dispositif pour la réalisation d'ensembles pour la commande et la protection de circuits électriques basse tension, appartenant à des installations industrielles, caractérisé en ce qu'il se compose essentiellement, en combinaison :

- d'une gaine horizontale modulable d'alimentation (9), avec des conducteurs électriques horizontaux superposés (12) rendus accessibles par l'avant au travers d'ouvertures (18) ménagées selon un pas de base déterminé (P),
- d'une structure porteuse (10) également modulable, à laquelle est fixée la gaine horizontale d'alimentation (9), et
- d'une multiplicité d'unités fonctionnelles amovibles (11), renfermant l'appareillage électrique proprement dit (en 27) et possédant des largeurs égales au pas de base (P) ou à des multiples du pas de base (P), chaque unité fonctionnelle (11) étant prévue pour être insérée dans la structure porteuse (10) et comportant des fiches de prise de courant (28) prévues pour venir s'embrocher dans la gaine d'alimentation (9), en traversant des ouvertures (18) de cette dernière, lorsque l'unité fonctionnelle (11) est insérée dans la structure porteuse (10).

2. Dispositif selon la revendication 1, caractérisé en ce que la gaine horizontale d'alimentation (9) comprend des conducteurs électriques horizontaux superposés (12), prévus pour un contact externe ou interne des fiches de prise de courant (18) appartenant aux unités fonctionnelles amovibles (11), entre lesquels sont disposés des séparateurs horizontaux isolants (13).

3. Dispositif selon la revendication 2, caractérisé en ce que la gaine horizontale d'alimentation (9) comprend encore des paires de demi-coquilles isolantes (14,15), appliquées devant et derrière les conducteurs (12) et les séparateurs (13) et assemblées entre elles (en 17), au moins les demi-coquilles (14) tournées vers l'avant présentant des rangées verticales d'ouvertures (18) ménagées au droit de chaque conducteur (12), pour le passage des fiches de prise de courant (28) appartenant aux unités fonctionnelles amovibles (11), l'intervalle entre deux rangées consécutives d'ouvertures (18) définissant le pas de base (P).

4. Dispositif selon la revendication 3, caractérisé en ce que les demi-coquilles isolantes (14,15) sont pourvues de rainures horizontales (16) pour le maintien des conducteurs (12) et des séparateurs (13).

5. Dispositif selon l'une quelconque des revendications 1 à 4, caractérisé en ce que la structure porteuse modulable (10) est composée d'éléments porteurs, comprenant d'une part un profilé (19) de positionnement et de fixation contre lequel est fixée la gaine horizontale d'alimentation (9) et qui reçoit les unités fonctionnelles (11) en position insérée, et d'autre part des cadres d'assemblage (21) qui solidarisent le profilé (19) avec une plaque-support inférieure (20) prévue pour recevoir le câblage.

6. Dispositif selon la revendication 5, caractérisé en ce que dans la structure porteuse (10), le profilé (19) de positionnement et de fixation possède une section en "C", la gaine horizontale d'alimentation (9) étant fixée contre le fond de ce profilé (19), tandis que les cadres d'assemblage (21) sont en forme de "L", leur partie inférieure tournée vers l'avant soutenant la plaque-support inférieure (20).

7. Dispositif selon la revendication 5 ou 6, caractérisé en ce que la structure porteuse (10) comporte en outre un ou des guides d'appui et de mise à la terre (22), coopérant avec une ou des tiges correspondantes (29) prévues à l'arrière d'une unité fonctionnelle amovible (11).

8. Dispositif selon l'une quelconque des revendications 5 à 7, caractérisé en ce que la structure porteuse (10) comprend encore un bornier (23) pour circuits de puissance et un bornier (24) pour circuits auxiliaires.

9. Dispositif selon l'ensemble des revendications 6 à 8, caractérisé en ce que les guides d'appui et de mise à la terre (22), ainsi que le bornier (23) pour circuits de puissance, sont logés dans le profilé de section en "C" (19), au-dessous de la gaine (9), tandis que le bornier (24) pour circuits auxiliaires est monté sur le bord antérieur de la plaque-support inférieure (20).

10. Dispositif selon la revendication 8 ou 9, caractérisé en ce que chaque unité fonctionnelle amovible (11) comprend un boîtier de base (25), contenant une platine (26) de préférence réglable en position qui supporte l'appareillage (en 27), tandis que la partie arrière du boîtier (25) supporte les fiches de prise de courant (28) prévues pour coopérer avec la gaine horizontale d'alimentation (9) ou avec le bornier (23) pour circuits de puissance.

11. Dispositif selon la revendication 10, caractérisé en ce que chaque unité fonctionnelle amovible (11) comporte encore à l'arrière un cache (33) de protection des fiches de prise de courant (28), venant s'encastrer dans la structure porteuse (10) lorsque l'unité fonctionnelle (11) est insérée.

12. Dispositif selon la revendication 10 ou 11, caractérise en ce que chaque unité fonctionnelle amovible (11) est munie d'un cordon souple multiconducteurs (31), pourvu d'une fiche terminale (32) prévue pour coopérer avec le bornier (24) pour circuits auxiliaires.

13. Dispositif selon l'une quelconque des revendications 10 à 12, caractérisé en ce que des poignées (34, 35) sont prevues sur le boîtier de base (25) de chaque unité fonctionnelle amovible (11), pour faciliter l'insertion ou le retrait de cette dernière.

14. Dispositif selon l'une quelconque des revendications 10 à 13, caractérisé en ce que le boîtier de base (25) de chaque unité fonctionnelle amovible (11) est fermé, à l'avant, par un couvercle transparent (30), ouvrant et/ou amovible, de préférence un couvercle dégondable.

15. Dispositif selon l'une quelconque des revendications 1 à 14, caractérisé par son application à la réalisation d'un ensemble industriel pour la commande et la protection de circuits électriques basse tension, composé de tels dispositifs superposés, constitués chacun d'une gaine horizontale d'alimentation (9), d'une structure porteuse (10) et d'une multiplicité d'unités fonctionnelles amovibles (11), l'ensemble étant monté sur un support général, fermé ou non.

# FIG.1

# FIG.2

# FIG.4

# FIG.3

FIG.5

FIG.6

# FIG.7

Office européen
des brevets

**RAPPORT DE RECHERCHE
EUROPEENNE**

Numéro de la demande

**EP 90 42 0455**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 126 913  (DELLE-ALSTHOM)<br>* page 4, lignes 10 - 32; figure 6 *<br>— — — | 1,5,6 | H 02 B<br>1/21 |
| A | US-A-2 960 674  (L.HARTON)<br>* colonne 2, ligne 63 - colonne 4, ligne 43; figures 1, 2, 5 *<br>— — — | 1-4 | |
| A | US-A-3 168 683  (R.BROKAW)<br>* colonne 2, ligne 17 - colonne 3, ligne 52; figures 2-4 *<br>— — — — — | 1 | |

DOMAINES TECHNIQUES
RECHERCHES (Int. Cl.5)

H 02 B
H 02 G
H 01 R

Le présent rapport de recherche a été établi pour toutes les revendications

| Lieu de la recherche | Date d'achèvement de la recherche | Examinateur |
|---|---|---|
| La Haye | 04 janvier 91 | WOODALL C.G. |